# EUROPEAN PATENT APPLICATION

(11) **EP 4 456 314 A1**
(43) Date of publication of application: **30.10.2024**
(21) Application number: 23875170.5
(22) Date of filing: 27.09.2023
(51) Int. Cl.: H01M 50/59, H01M 50/195, H01M 50/188, H01M 50/213, H01M 50/249

(54) **CYLINDRICAL SECONDARY BATTERY, AND BATTERY PACK AND VEHICLE INCLUDING SAME**

(30) Priority: 04.10.2022 KR 20220126545
(71) Applicant: LG Energy Solution, Ltd., Seoul 07335 (KR)
(72) Inventor: HWANGBO, Kwang-Su, Daejeon 34122 (KR); KIM, Do-Gyun, Daejeon 34122 (KR); OH, Jeong-Seop, Daejeon 34122 (KR); LIM, Gu-Min, Daejeon 34122 (KR); JO, Min-Ki, Daejeon 34122 (KR); CHOI, Su-Ji, Daejeon 34122 (KR)
(74) Representative: Goddar, Heinz J.
(86) International application number: PCT/KR2023/015083
(87) International publication number: WO 2024/076106

(57) **Abstract**

The present disclosure relates to a cylindrical secondary battery including an insulation gasket interposed between a housing and a terminal. The insulation gasket included in the cylindrical secondary battery of the present disclosure comprises a predetermined polymer resin and a predetermined flame retardant additive, thereby improving safety of the cylindrical secondary battery. In particular, in the vent of fire or explosion, the present disclosure prevents a short between the positive electrode and the negative electrode, thereby preventing fire propagation or explosion.

## Description

### TECHNICAL FIELD

The present disclosure relates to a cylindrical secondary battery and a battery pack and a vehicle including the same. More particularly, the present disclosure relates to a cylindrical secondary battery with improved safety and a battery pack and a vehicle including the same.

The present application claims priority to Korean Patent Application No. 10-2022-0126545 filed on October 4, 2022 in the Republic of Korea, the disclosure of which is incorporated herein by reference.

### BACKGROUND ART

Due to being easily applicable to various products and having electrical properties such as high energy density, secondary batteries are commonly applied to not only portable devices but also electric vehicles (EVs) or hybrid electric vehicles (HEVs) powered by electricity.

Secondary batteries remarkably reduce the use of fossil fuels, and in addition to the primary advantage, they do not generate by-products from the use of energy. From this perspective, secondary batteries are seen as a new source of energy with eco-friendliness and energy efficiency.

Among the types of secondary batteries, cylindrical, prismatic and pouch type secondary batteries are known. A cylindrical secondary battery comprises an electrode assembly comprising a positive electrode and a negative electrode wound into a jelly-roll shape with a separator serving as an insulator interposed between them, and a housing accommodating the electrode assembly and an electrolyte. In addition, a strip-shaped electrode tab may be connected to an uncoated region of each of the positive electrode and the negative electrode, and the electrode tab connects the electrode assembly to an electrode terminal exposed to the outside. However, according to the cylindrical secondary battery having this structure, an electric current concentrates on the strip-shaped electrode tab coupled to the positive electrode uncoated region and/or the negative electrode uncoated region, resulting in high resistance, a large amount of heat generated and low current collection efficiency.

The resistance and heat generation is not a major issue to small cylindrical secondary batteries with 1865 or 2170 form factor. However, to apply cylindrical secondary battery to electric vehicles, as the form factors are larger, the larger amount of heat is generated around the electrode tab during rapid charging, causing fires in cylindrical secondary batteries.

In order to solve this problem, cylindrical secondary batteries (so-called tab-less cylindrical secondary batteries) with improved current collection efficiency have been proposed, in which the positive electrode uncoated region and the negative electrode uncoated region are positioned on the upper and lower ends of the jelly-roll type electrode assembly, respectively, and a current collector plate is welded to the uncoated region.

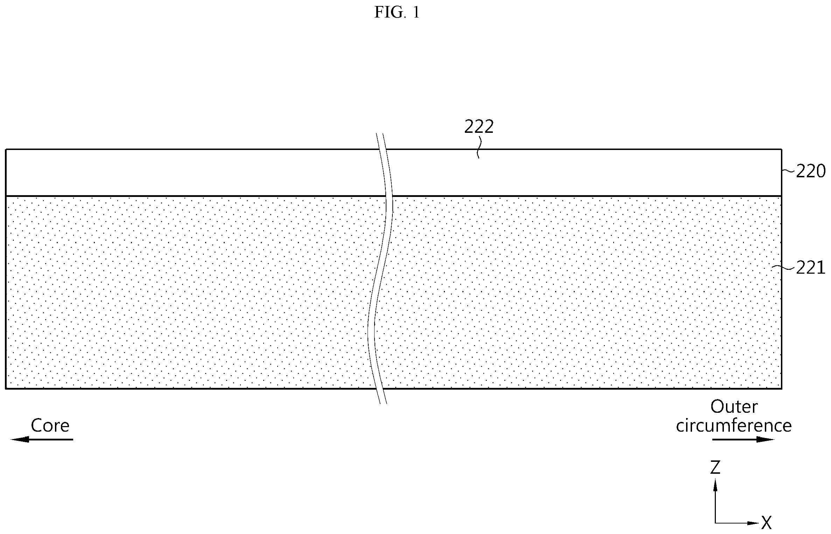

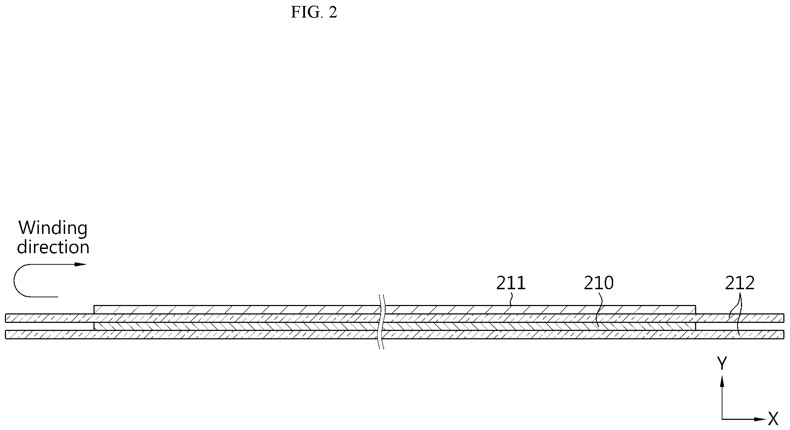

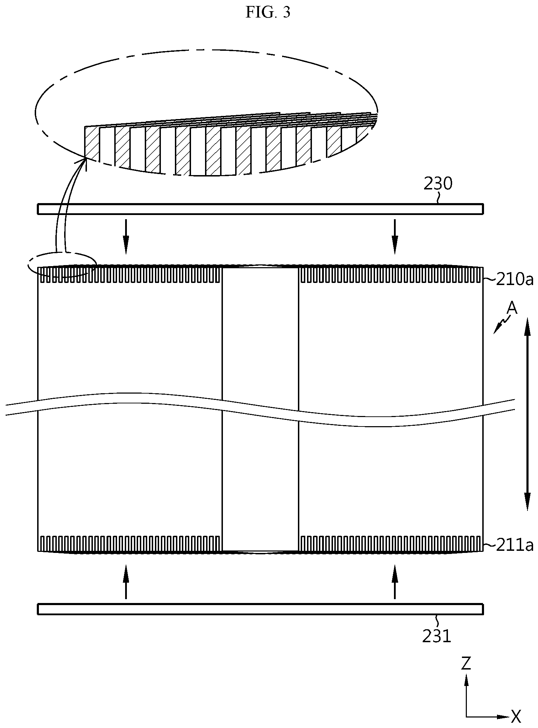

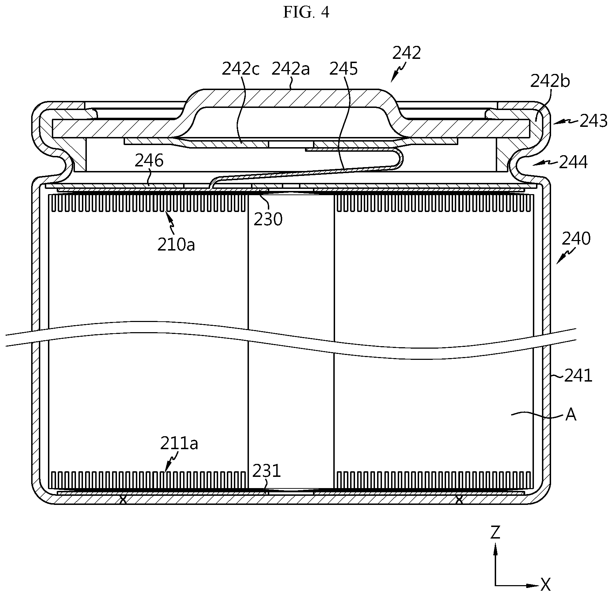

FIGS. 1 to 3 are diagrams showing a process of manufacturing a conventional tab-less cylindrical secondary battery. FIG. 1 shows the structure of an electrode plate, FIG. 2 shows a process of winding the electrode plate, and FIG. 3 shows a process of welding the current collector plate to a bend surface of the uncoated region. FIG. 4 is a cross-sectional view of the conventional tab-less cylindrical secondary battery, taken along the length direction Y.

Referring to FIGS. 1 to 4, the positive electrode plate 210 and the negative electrode plate 211 have a structure that the sheet-shaped current collector 220 is coated with an active material 221, and include the uncoated region 222 on one long side along a winding direction X.

The electrode assembly A is made by sequentially stacking the positive electrode plate 210 and the negative electrode plate 211 together with two sheets of separators 212 as shown in FIG. 2 and winding them in a direction X. In this instance, the uncoated region of the positive electrode plate 210 and the uncoated region of the negative electrode plate 211 are arranged in opposite directions.

After the winding process, the uncoated region 210a of the positive electrode plate 210 and the uncoated region 211a of the negative electrode plate 211 are bent toward a core. Afterward, the current collector plates 230, 231 are coupled to the uncoated regions 210a, 211a by welding, respectively.

Any electrode tab is not coupled to the positive electrode uncoated region 210a and the negative electrode uncoated region 211a, the current collector plates 230, 231 are connected to external electrode terminals, and a current path is formed with a large cross-sectional area along the winding axis direction of the electrode assembly A (see the arrow), thereby reducing the resistance of the secondary battery. This is because the resistance is inversely proportional to the cross-sectional area of a passage through which the current flows.

However, when the form factor of the cylindrical secondary battery increases and the magnitude of the charging current increases during rapid charging, the heat generation problem occurs in the tab-less cylindrical secondary battery.

Specifically, the conventional tab-less cylindrical secondary battery 240 includes a housing 241 and a sealing structure 242 as shown in FIG. 4. The sealing structure 242 includes a cap 242a, a sealing gasket 242b and a connection plate 242c. The sealing gasket 242b surrounds the edge of the cap 242a and is fixed by a crimping portion 243. In addition, the electrode assembly A is fixed within the housing 241 by a beading portion 244 to prevent vertical movement.

Typically, the positive electrode terminal is the cap 242a of the sealing structure 242, and the negative electrode terminal is the housing 241. Therefore, the current collector plate 230 coupled to the uncoated region 210a of the positive electrode plate 210 is electrically connected to the connection plate 242c attached to the cap 242a through a strip-shaped lead 245. In addition, the current collector plate 231 coupled to the uncoated region 211a of the negative electrode plate 211 is electrically connected to the bottom of the housing 241. The insulator 246 covers the current collector plate 230 to prevent a short circuit caused by the contact between the housing 241 and the uncoated region 210a of the positive electrode plate 210 having different polarities.

When the current collector plate 230 is connected to the connection plate 242c, the strip-shaped lead 245 is used. The lead 245 is attached to the current collector plate 230, or the lead 245 and the current collector plate 230 are integrally formed. However, since the lead 245 is in the shape of a thin strip, its cross-sectional area is small. When the rapid charging current flows, a large amount of heat is generated. In addition, excessive heat generated from the lead 245 is transferred to the electrode assembly A, causing the separator 212 to shrink, and the consequential internal short circuit that is a main cause of thermal runaway.

That is, when the battery is in abnormal operating environments by the exposure to high temperature, overcharge exceeding the allowed current and voltage, internal short circuits or physical external forces, the secondary battery may be heated and exploded. Accordingly, it is necessary to ensure safety in order to prevent fires or explosion in the secondary battery. In particular, when the cylindrical secondary battery is included in an electric vehicle, since a few hundreds of cylindrical secondary batteries are included, in the event of a fire or explosion in a certain cylindrical secondary battery, safety enhanced design for preventing fire propagation and explosion is needed.

### SUMMARY

### Technical Problem

Therefore, the present disclosure is directed to providing a cylindrical secondary battery with improved safety and a battery pack and a vehicle including the same.

It will be readily understood that these and other objectives and advantages of the present disclosure may be realized by the means or methods set forth in the appended claims and a combination thereof.

### Technical Solution

To solve the above-described problem, according to an aspect of the present disclosure, there is provided a cylindrical secondary battery comprising an electrode assembly which defines a core and an outer circumferential surface by winding a first electrode, a second electrode and a separator interposed between the first electrode and the second electrode around a winding axis, wherein the first electrode includes a first uncoated region, and the second electrode includes a second uncoated region, each uncoated region having no active material layer coating along a winding direction; a housing accommodating the electrode assembly through an open portion at a lower end and electrically connected to the second uncoated region; a terminal electrically connected to the first uncoated region, and exposed to outside of the housing through a closed portion of the housing opposite the open portion; and an insulation gasket interposed between the housing and the terminal at the closed portion of the housing, wherein the insulation gasket comprises a polymer resin and a flame retardant additive.

The cylindrical secondary battery may comprise a sealing gasket interposed between the housing and the cap at the open portion of the housing to allow the cap to seal the open portion, and the sealing gasket may comprise a polymer resin and a flame retardant additive.

The polymer resin may comprise polyethylene, polypropylene, polyisobutylene, polyethyleneterephthalate (PET), polybutylene terephthalate (PBT), poly phenylene sulfide (PPS), or two or more of them.

The flame retardant additive may comprise a phosphorus-based flame retardant, an inorganic flame retardant, a halogen flame retardant, or two or more of them.

The flame retardant additive may be a phosphorus-based flame retardant.

The flame retardant additive may be free of halogen.

The flame retardant additive included in the insulation gasket may be included in an amount of 5% to 30% based on a total weight of the insulation gasket.

The flame retardant additive included in the sealing gasket may be included in an amount of 5% to 30% based on a total weight of the sealing gasket.

According to another aspect of the present disclosure, there is provided a battery pack comprising the above-described cylindrical secondary battery.

According to still another aspect of the present disclosure, there is provided a vehicle comprising the battery pack.

### Advantageous Effects

The present disclosure may improve the safety of the cylindrical secondary battery since the insulation gasket interposed between the housing and the terminal comprises the predetermined polymer resin and the predetermined flame retardant additive. In particular, the present disclosure may prevent shorts between the positive electrode and the negative electrode in the event of fire or explosion, thereby preventing fire propagation or explosion.

### BRIEF DESCRIPTION OF THE DRAWINGS

The accompanying drawings illustrate exemplary embodiments of the present disclosure and together with the detailed description, serve to provide a further understanding of the technical aspect of the present disclosure, and the scope of the present disclosure is not limited thereto. In the drawings, for clarity of description, the shape, size, scale or proportion of the elements may be exaggerated for emphasis.
FIG. 1 is a plan view showing a structure of an electrode plate used in a conventional tab-less cylindrical secondary battery.
FIG. 2 is a diagram showing a process of winding an electrode assembly included in a conventional tab-less cylindrical secondary battery.
FIG. 3 is a diagram showing a process of welding a current collector plate to a bend surface of an uncoated region in the electrode assembly of FIG. 2.
FIG. 4 is a cross-sectional view of a conventional tab-less cylindrical secondary battery, taken along a length direction Y.
FIG. 5 is a diagram showing the exterior of a cylindrical secondary battery according to an embodiment of the present disclosure.
FIG. 6 is a cross-sectional view showing an internal structure of a cylindrical secondary battery according to an embodiment of the present disclosure.
FIG. 7 is a partial cross-sectioned view showing an upper structure of a cylindrical secondary battery according to an embodiment of the present disclosure.
FIG. 8 shows a flame test evaluation result (image) of a cylindrical secondary battery according to Comparative Example 1.
FIG. 9 shows a flame test evaluation result (image) of a cylindrical secondary battery according to Example 1.

### DETAILED DESCRIPTION

Hereinafter, exemplary embodiments of the present disclosure will be described in detail with reference to the accompanying drawings. Prior to the description, it should be understood that the terms or words used in the present disclosure and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and illustrations shown in the drawings are provided to describe the exemplary embodiments of the present disclosure, but not intended to fully describe the technical aspect of the present disclosure, so it should be understood that a variety of other equivalents and modifications could have been made thereto at the time the application was filed.

In addition, to help the understanding of the present disclosure, the accompanying drawings may illustrate some elements in exaggerated dimensions, not in actual scale. Furthermore, the same element in different embodiments may be given the same reference numeral.

The term 'equal' means 'substantially equal'. Accordingly, 'substantially equal' may include the deviation regarded as a low level in the corresponding technical field, for example, the deviation of 5% or less. In addition, it should be understood that when a parameter is referred to as being uniform in an area, it may be uniform from the average point of view.

The terms "first", "second" and the like are used to describe many different elements, but it is obvious that the elements are not limited by the terms. These terms are used to distinguish one element from another, and unless the context clearly indicates otherwise, a first element may be a second element.

In the present disclosure, unless the context clearly indicates otherwise, each element may be singular or plural.

It should be further understood that when an element is referred to as being "on (or under)" or "above (or below)" another element, it can be disposed on an upper surface (or a lower surface) and intervening elements may be present between the element and the other element disposed on (or under) the element.

In addition, it should be understood that when an element is referred to as being "connected to", "coupled to" or "joined to" another element, it can be directly connected or joined to the other element, or intervening elements may be present between each element or each element may be "connected", "coupled" or "joined" to each other through another element.

In the present disclosure, unless the context clearly indicates otherwise, "A and/or B" refers to either A or B or both, and "C to D" refers to C or more and D or less.

For convenience of description, a direction running along a length direction of a winding axis of an electrode assembly wound into a jelly-roll shape is referred to as an axial direction (Y). A direction surrounding the winding axis is referred to as a circumferential direction (X). A direction facing toward or facing away from the axial direction is referred to as a radial direction. In particular, the direction facing toward the winding axis is referred to as a centripetal direction, and the direction facing away from the winding axis is referred to as a centrifugal direction.

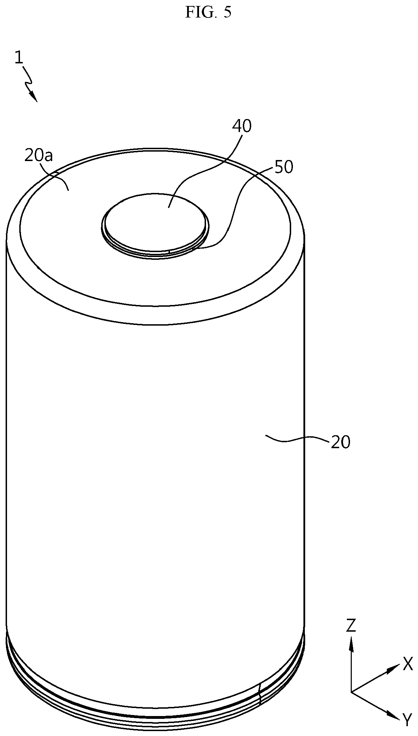

Referring to FIGs. 5 to 7, a cylindrical secondary battery 1 according to an embodiment of the present disclosure includes an electrode assembly 10, a housing 20, a terminal 40 and an insulation gasket 50. In addition to these components, the cylindrical secondary battery 1 may further include a cap 30 and/or a first current collector 60 and/or an insulator 70 and/or a second current collector 80 and/or a sealing gasket 90.

### <Electrode assembly>

The electrode assembly 10 includes a first electrode having a first polarity, a second electrode having a second polarity, and a separator interposed between the first electrode and the second electrode. The first electrode is a positive electrode or a negative electrode, and the second electrode corresponds to an electrode having the opposite polarity to the first electrode.

The electrode assembly 10 may have, for example, a jelly-roll structure. That is, the electrode assembly 10 may be made by stacking the first electrode and the second electrode having a sheet shape at least once with the separator interposed between them to form a stack, and winding the stack around a winding center C. In this case, an additional separator may be provided on an outer circumferential surface of the electrode assembly 10 for insulation from the housing 20. Any jelly-roll structure known in the corresponding technical field may be applied to the present disclosure without limitation.

The first electrode includes the first electrode current collector and a first electrode active material coated on one or two surfaces of the first electrode current collector. An uncoated region, in which the first electrode active material is not coated, is present at one end of the first electrode current collector in the width direction (parallel to the Z axis). The uncoated region serving as a first uncoated region is hereinafter referred to as a first uncoated region 11. The first uncoated region 11 is present at the upper part of the electrode assembly 10 received in the housing 20 in the height direction (parallel to the Z axis). That is, the first electrode current collector includes the first uncoated region 11 that has no active material layer coating and is exposed to the outside of the separator at the long side end, and part of the first uncoated region 11 itself is used as an electrode tab. The first uncoated region 11 may be, for example, a positive electrode tab.

Meanwhile, at least part of the first uncoated region 11 may include a plurality of segments segmented along the winding direction of the electrode assembly 10. In this case, the plurality of segments may be bent along the radial direction of the electrode assembly 10. The plurality of bent segments may overlap in multiple layers. In this case, a first uncoated region coupling portion 62 of the first current collector 60 as described below may be coupled to an area in which the plurality of segments overlaps in multiple layers. Meanwhile, the electrode assembly 10 may have a target weld zone in which the number of overlapping layers of the segments of the first uncoated region 11 is kept constant along the radial direction of the electrode assembly 10. In this zone, an approximately largest number of overlapping layers is maintained, so welding the first current collector 60 and the first uncoated region 11 as described below in this zone may be advantageous. For example, in case of laser welding being applied, it is to prevent damage to the electrode assembly 10 by a laser beam passing through the first uncoated region 11 when increasing the output of the laser to improve the weld quality. Additionally, it is to effectively prevent impurities such as weld spatter from entering the electrode assembly 10.

The second electrode includes the second electrode current collector and a second electrode active material coated on one or two surfaces of the second electrode current collector. An uncoated region in which the second electrode active material is not coated is present at the other end of the second electrode current collector in the width direction (parallel to the Z axis). The uncoated region serving as a second uncoated region is hereinafter referred to as a second uncoated region 12. The second uncoated region 12 is present at the lower part of the electrode assembly 10 received in the housing 20 in the height direction (parallel to the Z axis). That is, the second electrode current collector includes the second uncoated region 12 that has no active material layer coating and is exposed to the outside of the separator at the long side end, and at least part of the second uncoated region 12 itself is used as an electrode tab. The second uncoated region 12 may be, for example, a negative electrode tab. Meanwhile, at least part of the second uncoated region 12 may include a plurality of segments segmented along the winding direction of the electrode assembly 10. In this case, the plurality of segments may be bent along the radial direction of the electrode assembly 10. The plurality of bent segments may overlap in multiple layers. In this case, a second uncoated region coupling portion 82 of the second current collector 80 as described below may be coupled to an area in which the plurality of segments overlaps in multiple layers. Meanwhile, the electrode assembly 10 may have a target weld zone in which the number of overlapping layers of the segments of the second uncoated region 12 is kept constant along the radial direction of the electrode assembly 10. In this zone, a largest number of overlapping layers is maintained, so welding the second current collector 80 and the second uncoated region 12 as described below in this zone may be advantageous. For example, in case of laser welding being applied, it is to prevent damage to the electrode assembly 10 by a laser beam passing through the second uncoated region 12 when increasing the output of the laser to improve the weld quality. Additionally, it is to effectively prevent impurities such as weld spatter from entering the electrode assembly 10.

The first uncoated region 11 and the second uncoated region 12 extend in the opposite directions along the height direction (parallel to the Z axis) of the cylindrical secondary battery 1. The first uncoated region 11 extends toward a closed portion opposite an open portion at the lower end of the housing 20, and the second uncoated region 12 extends toward the open portion of the housing 20.

In the present disclosure, the positive electrode active material coated on the positive electrode plate and the negative electrode active material coated on the negative electrode plate may include any active material known in the corresponding technical field without limitation.

Additionally, the separator may include any separator known in the corresponding technical field without limitation. For example, the separator may include a porous polymer film, for example, a porous polymer film made of polyolefin-based polymer such as ethylene homopolymer, propylene homopolymer, an ethylene/butene copolymer, an ethylene/hexene copolymer, an ethylene/methacrylate copolymer or a stack of them, and a separator comprising a coating layer of inorganic particles on at least one surface of the separator.

### <Housing>

The housing 20 is a substantially cylindrical container having the open portion on the lower side, and may be made of, for example, a material having conductive properties such as metal. The material of the housing 20 may include, for example, steel, stainless steel or nickel-plated steel. The bottom portion of the housing 20 having the open portion will be referred to as an opened end. The upper surface opposite the open portion (or the open end) is referred to as a closed portion or a closed end. The side (outer circumferential surface) and the closed portion of the housing 20 may be integrally formed. Alternatively, the sidewall and the closed portion of the housing 20 may be provided separately from each other and coupled to each other, for example, by welding. The upper surface of the housing 20 (parallel to the X-Y plane), i.e., an outer surface 20a of the closed portion is approximately flat in shape. The housing 20 may accommodate the electrode assembly 10 through the open portion at the lower side, and also accommodates an electrolyte together.

The housing 20 is electrically connected to the electrode assembly 10. The housing 20 is electrically connected to the second uncoated region 12 of the electrode assembly 10. In this case, the housing 20 has the same polarity as the second uncoated region 12.

The housing 20 may include a beading portion 21 and a crimping portion 22 at the lower end thereof. The beading portion 21 is disposed below the electrode assembly 10. The beading portion 21 is formed by beading the outer circumferential surface of the housing 20 along the periphery. More specifically, the beading portion 21 may be beaded inwards at an area between the open portion at one side of the battery housing 20 and an accommodation portion accommodating the electrode assembly 10. The crimping portion 22 is disposed below the beading portion 21. The crimping portion 22 extends from a lower portion of the beading portion 21. The crimping portion 22 is extended and bent to surround the outer circumferential surface of the cap 30 disposed below the beading portion 21 and a part of the lower surface of the cap 30. The crimping portion 22 may fix not only the cap 30 but also the sealing gasket 90. However, the present disclosure does not exclude the case where the housing 20 does not include the beading portion 21 and/or the crimping portion 22. In the present disclosure, in the case where the housing 20 does not include the beading portion 21 and/or the crimping portion 22, fixing the electrode assembly 10 and/or fixing the cap 30 and/or sealing the housing 20 may be, for example, realized by additionally applying a component serving as a stopper for the electrode assembly 10 and/or additionally applying a structure on which the cap 30 is seated and/or welding the housing 20 and the cap 30.

### <Terminal>

The terminal 40 may be made of a metal having conductive properties. The material of the terminal 40 may include, for example, aluminum (Al).

The terminal 40 is, for example, electrically connected to the first uncoated region 11 of the electrode assembly 10. In this instance, the terminal 40 has the first polarity. Accordingly, the terminal 40 may act as a first electrode terminal in the cylindrical secondary battery 1 of the present disclosure. When the terminal 40 has the first polarity, the terminal 40 is electrically insulated from the housing 20 having the second polarity. In the present disclosure, insulation may be achieved by the insulation gasket 50 as described below interposed between the terminal 40 and the housing 20.

The terminal 40 may be exposed to the outside of the housing through the closed portion opposite to the open portion of the housing, and include a terminal exposure portion 41 and a terminal insert portion 42. The terminal insert portion 42 may include an electrical connection portion 42a and a flange portion 42b. The terminal exposure portion 41 is exposed to the outside of the housing 20. The terminal exposure portion 41 may be approximately disposed at the center of the closed portion of the housing 20. The maximum width of the terminal exposure portion 41 may be larger than the maximum width of a hole of the housing 20 to allow the terminal 40 to be inserted. That is, for the exposure of the terminal 40, the outer diameter of the terminal 40 exposed to the outside of the closed portion may be larger than the inner diameter of the hole at the closed portion of the housing 20. Accordingly, for the exposure of the terminal 40, the cross section of the hole at the closed portion may be included in the cross section of the terminal 40 exposed to the outside of the closed portion. Additionally, the exposed part of the terminal 40 exposed to the outside of the closed portion may cover at least a part of the closed portion of the housing 20 in the axial direction. The terminal insert portion 42 may pass through approximately the center of the closed portion of the housing 20, and the electrical connection portion 42a of the terminal insert portion 42 may be electrically connected to the first uncoated region 11. The flange portion 42b of the terminal insert portion 42 may be disposed around the electrical connection portion 42a, and coupled onto the inner surface of the closed portion of the housing 20 by riveting. That is, the flange portion 42b of the terminal insert portion 42 may have a curved shape that curves toward the inner surface of the closed portion of the housing 20. Therefore, the maximum width of the terminal insert portion 42 after the riveting process for fixing the terminal 40 may be larger than the maximum width of the hole of the housing 20 to allow the terminal insert portion 42 to pass through.

Meanwhile, when the cylindrical secondary battery 1 of the present disclosure includes the first current collector 60, the electrical connection portion 42a of the terminal insert portion 42 may be coupled to the first current collector 60. The electrical connection portion 42a of the terminal insert portion 42 may be, for example, approximately cylindrical in shape. The shape of the electrical connection portion 42a of the terminal insert portion 42 is not limited thereto. The electrical connection portion 42a of the terminal insert portion 42 may have various shapes, for example, a cylindrical shape having an elliptical cross section, a square prism shape, a hexagonal prism shape, an octagonal prism shape and so on. At least a part of the bottom surface of the electrical connection portion 42a of the terminal insert portion 42 may be approximately flat. The coupling between the bottom surface of the central part of the terminal insert portion 42 and the first current collector 60 may be made by, for example, laser welding, spot welding or ultrasonic welding.

In the present disclosure, the upper surface of the housing 20, i.e., the outer surface 20a of the closed portion of the housing 20 and the upper surface of the terminal exposure portion 41 of the terminal 40 exposed to the outside of the housing 20 may have the opposite polarities and face the same direction.

### <Insulation gasket>

The insulation gasket 50 is interposed between the housing 20 and the terminal 40 to prevent the contact between the housing 20 and the terminal 40 having the opposite polarities. The upper surface of the housing 20 having an approximately flat shape may act as a second electrode terminal of the cylindrical secondary battery 1. For example, in the entire area of the upper surface of the housing 20 when viewed from the top of the cylindrical secondary battery 1, the remaining area excluding the area occupied by the terminal 40 and the insulation gasket 50 may correspond to the second electrode terminal having the opposite polarity to the terminal 40.

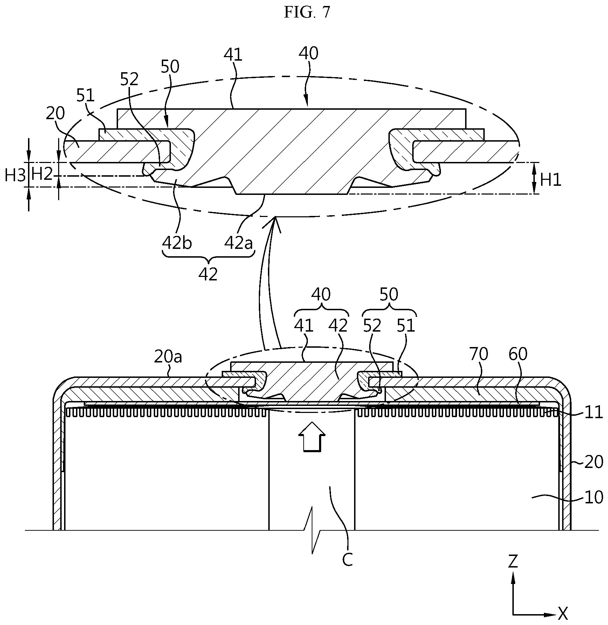

Referring to FIG. 7, the insulation gasket 50 may include a gasket exposure portion 51 and a gasket insert portion 52. The gasket exposure portion 51 is interposed between the terminal exposure portion 41 of the terminal 40 and the housing 20. The gasket exposure portion 51 may extend longer than the terminal exposure portion 41, and thus may be exposed to the outside of the terminal exposure portion 41 when the cylindrical battery cell 1 is viewed from the top. The gasket insert portion 52 is interposed between the terminal insert portion 42 of the terminal 40 and the housing 20. When riveting the flange portion 42b of the terminal insert portion 42, the gasket insert portion 52 may deform together and come into close contact with the inner surface of the closed portion of the housing 20.

Although not shown in the drawings, the gasket exposure portion 51 of the insulation gasket 50 may be extended to cover the outer circumferential surface of the terminal exposure portion 41 of the terminal 40, and in addition to the outer circumferential surface of the terminal exposure portion 41, may be extended to cover a part of the upper surface of the terminal exposure portion 41.

The insulation gasket 50 comprises a polymer resin and a flame retardant additive. In this instance, the insulation gasket 50 may be coupled to the housing 20 and the terminal 40 by thermal fusion, and it may be possible to enhance sealability at the coupling interface between the insulation gasket 50 and the terminal 40 and the coupling interface between the insulation gasket 50 and the housing 20. Meanwhile, when the gasket exposure portion 51 of the insulation gasket 50 is extended to the upper surface of the terminal exposure portion 41, the terminal 40 may be coupled to the insulation gasket 50 by insert molding.

The polymer resin may comprise polyolefin, polyester, polyarylene sulfide, thermoplastic polyester elastomer (TPEE), perfluoroalkoxy resin, polyimide, or two or more of them. Specifically, the polymer resin may comprise polyethylene, polypropylene, polyisobutylene, polyethyleneterephthalate (PET), polybutylene terephthalate (PBT), poly phenylene sulfide (PPS), or two or more of them.

When these exemplary polymer resins are included, it may be possible to ensure formability and ductility of the insulation gasket, and exhibit good heat resistance and mechanical properties. In particular, since polybutylene terephthalate (PBT) is an elastomer having high elasticity, improved moldability makes it easy to form the gasket, and high melting point ensures high stability at high temperature. Additionally, when the flame retardant additive is added to the polymer resin, the properties such as strength or elongation generally reduce, but when the flame retardant additive is added to polybutylene terephthalate, it may be possible to minimize the properties degradation.

Additionally, the polymer resin may have the melting point of 250°C or higher and heat deformation temperature of 200°C or higher. When the polymer resin satisfying the above-described characteristics is included, in the event of overheating due to electrical short circuits in the secondary battery or the outdoor environment, the polymer resin does not become flowable below the melting point, and it may be possible to suppress structure deformation at the area of contact with the gasket, thereby preventing an additional current flow and ensuring safety of the battery.

However, when only the polymer resin is included in the insulation gasket, when the battery is exposed to high temperature or placed in abnormal operating environments, the secondary battery may overheat and have fire or explosion risks, so safety enhanced design is needed. Accordingly, the present disclosure comprises the flame retardant additive together with the polymer resin to prevent shorts between terminals, thereby preventing fire propagation or explosion and enhancing stability.

In the present disclosure, since the insulation gasket comprises the flame retardant additive, it may be possible to enhance safety of the cylindrical secondary battery. In particular, the cylindrical secondary battery has high risks of fire propagation or explosion, but the present disclosure may prevent shorts between the first electrode and the second electrode, i.e., the positive electrode and the negative electrode, thereby preventing fire propagation or explosion in the event of fire or explosion.

In particular, in the present disclosure, when making the insulation gasket, the polymer resin is mixed with the flame retardant additive and injection molding is performed, so the entire gasket can serve as a flame retardant, thereby effectively preventing shorts. When the flame retardant is not used to make the gasket, and instead the flame retardant is filled in the space in the secondary battery, as opposed to the present disclosure, the gasket cannot play a role in preventing shorts between the positive electrode and the negative electrode, thereby failing to prevent fire propagation or explosion.

The flame retardant additive may comprise a phosphorus-based flame retardant, an inorganic flame retardant, a halogen flame retardant, or two or more of them. Preferably, considering environmental friendliness, the flame retardant additive may a halogen-free flame retardant, and more preferably a phosphorus-based flame retardant. In particular, when the flame retardant additive is added to the polymer resin, the properties such as strength or elongation generally reduce, but when polybutylene terephthalate is used as the polymer resin and a phosphorus-based flame retardant is used as the flame retardant additive, the properties degradation of the polybutylene terephthalate was significantly reduced. Accordingly, when the insulation gasket comprises a mixture of the polybutylene terephthalate and the phosphorus-based flame retardant, it may be possible to ensure moldability and high temperature stability of the polybutylene terephthalate and flame retardancy of the phosphorus-based flame retardant.

The flame retardant additive may be included in an amount of 5% to 30%, or 5% to 15%, or 10% to 15% based on the total weight of the insulation gasket. When the flame retardant additive is included in the above-described range, it may be possible to maintain formability and ductility of the insulation gasket and prevent shorts between the positive electrode and the negative electrode, thereby preventing fire propagation or explosion in the event of fire or explosion. In particular, when the above-described range is not satisfied, the effect of the flame retardant additive is too low to prevent shorts, and when the flame retardant additive is included above the above-described range, the properties of the polymer resin may be degraded.

Meanwhile, each of the insulator 70 and the sealing gasket 90 may be made of the same material as the insulation gasket 50. However, it is not essential.

The thickness of the insulation gasket 50 may gradually decrease from the middle area where the gasket exposure portion 51 and the gasket insert portion 52 are connected to each other and slightly increase at the lowest end of the gasket insert portion 52. The compression structure of the insulation gasket 50 may further improve the sealing of the space between the terminal 40 and the housing 20.

Preferably, the riveting structure of the terminal 40 according to the above-described embodiment of the present disclosure may be applied to cylindrical secondary batteries with form factors that are larger than 21700.

Recently, as cylindrical secondary batteries are applied to electric vehicles, the form factors of cylindrical secondary batteries are increasing compared to the existing form factors such as 1865, 2170. The increased form factor leads to increased energy density, enhanced safety against thermal runaway and improved cooling efficiency.

Additionally, the cylindrical secondary battery 1 having the riveting structure of the terminal 40 may achieve electrical wiring for both the positive electrode/the negative electrode in a direction. Additionally, the terminal 40 having the riveting structure as described above is very advantageous for fast charging due to the large cross-sectional area and low electrical resistance.

### <Additional component>

According to an embodiment of the present disclosure, in addition to the above-described components, the cylindrical secondary battery 1 may further include the cap 30 and/or the first current collector 60 and/or the insulator 70 and/or the second current collector 80 and/or the sealing gasket 90.

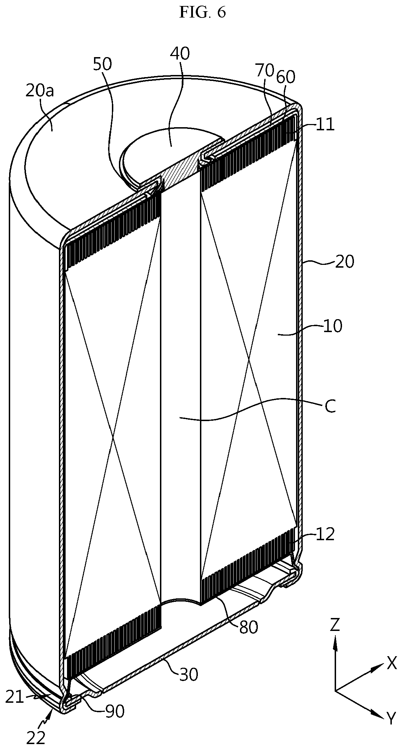

Referring to FIG. 6, the cap 30 may be, for example, made of a metal to ensure stiffness. The cap 30 seals the open portion (or open end) at the lower end of the housing 20. That is, the cap 30 may form the lower surface of the cylindrical secondary battery 1. In the cylindrical secondary battery 1 of the present disclosure, the cap 30 may have no polarity even when it is made of a metal having conductive properties. No polarity signifies that the cap 30 is not electrically connected to the electrode assembly 10. When the cap 30 is not electrically connected to the electrode assembly 10, the cap 30 does not act as the positive electrode terminal or the negative electrode terminal. That is, in the present disclosure, the cap 30 does not need to be electrically connected to the electrode assembly 10 and the housing 20, and its material is not necessarily a conductive metal.

Referring to FIGs. 6 and 7, the first current collector 60 may be disposed on the electrode assembly 10 and coupled to the terminal 40. That is, the first current collector 60 may be configured to electrically connect the first uncoated region 11 of the electrode assembly 10 to the terminal 40. The first current collector 60 may be made of a metal having conductive properties, and connected to the first uncoated region 11.

The first current collector 60 may be coupled to the end of the first uncoated region 11. The coupling between the first uncoated region 11 and the first current collector 60 may be, for example, performed by laser welding. The laser welding may be performed by melting a part of the substrate of the first current collector 60 with solder for welding interposed between the first current collector 60 and the first uncoated region 11. In this instance, the solder has preferably a lower melting point than the first current collector 60 and the first uncoated region 11.

Referring to FIG. 6, the second current collector 80 may be disposed below the electrode assembly 10 and configured to electrically connect the second uncoated region 12 of the electrode assembly 10 to the housing 20. The second current collector 80 may be made of a metal having conductive properties and connected to the second uncoated region 12.

The second current collector 80 may be coupled to the end of the second uncoated region 12. The coupling between the second uncoated region 12 and the second current collector 80 may be, for example, performed by laser welding. The laser welding may be performed by melting a part of the substrate of the second current collector 80 with solder for welding interposed between the second current collector 80 and the second uncoated region 12. In this instance, the solder has preferably a lower melting point than the second current collector 80 and the second uncoated region 12.

The insulator 70 may be disposed between the upper end of the electrode assembly 10 and the inner surface of the housing 20 or between the first current collector 60 coupled to the top of the electrode assembly 10 and the inner surface of the closed portion of the housing 20. The insulator 70 prevents the contact between the first uncoated region 11 and the housing 20 and/or between the first current collector 60 and the housing 20. The insulator 70 may be also interposed between the upper end of the outer circumferential surface of the electrode assembly 10 and the sidewall of the housing 20. That is, the insulator 70 may be also interposed between the first uncoated region 11 and the sidewall portion of the housing 20. The first current collector 60 may be a plate that fully extends across the upper end of the outer circumferential surface of the electrode assembly 10. However, the present disclosure is not limited thereto, and the first current collector 60 may partially extend across the upper end of the outer circumferential surface of the electrode assembly 10.

When the cylindrical secondary battery 1 according to an embodiment of the present disclosure includes the insulator 70, the terminal insert portion 42 of the terminal 40 is coupled to the first current collector 60 or the first uncoated region 11 through a hole of the insulator 70.

Referring to FIG. 6, the sealing gasket 90 may be interposed between a structure for fixing at the open portion of the housing 20 and the cap 30 to ensure sealability of the housing 20.

The sealing gasket 90 may comprise a polymer resin and a flame retardant additive. In this instance, the sealing gasket 90 may be coupled to the housing 20 and the cap 30 by thermal fusion, and it may be possible to enhance sealability at the coupling interface between the sealing gasket 90 and the cap 30 and the coupling interface between the sealing gasket 90 and the housing 20.

For the polymer resin and the flame retardant additive included in the sealing gasket, reference is made to the description of the insulation gasket. For example, the sealing gasket 90 may comprise the polymer resin and the flame retardant additive of the same type as those included in the insulation gasket 50.

Hereinafter, examples will be described in detail to provide a detailed description of the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

### EXAMPLE

### Comparative Example 1

An insulation gasket was made using polybutylene terephthalate (PBT, melting point 223°C, LG CHEM.).

### Example 1

An insulation gasket was made by mixing polybutylene terephthalate (PBT, melting point 223°C, LG CHEM.) with a flame retardant additive. In this instance, the flame retardant additive was a phosphorus-based flame retardant (LG CHEM.) free of halogen and was added in an amount of 12% based on the total weight of the insulation gasket.

### Performance evaluation

A flame test was performed on the cylindrical secondary batteries with the insulation gaskets prepared by Comparative Example 1 and Example 1.

The flame test was performed by applying flames to the terminal and the insulation gasket of each cylindrical secondary battery for 15 seconds and evaluating whether a short occurs. Whether a short occurs was determined through resistance measurement. The measured resistance of 5Q or more was evaluated as PASS, and the measured resistance of less than 5Q was evaluated as NG.

Table 1 summarizes whether a short occurs and resistance measurement results.

**[Table 1]**

| | Type of insulation gasket | Whether a short occurs | Resistance measurement result |
|---|---|---|---|
| Comp arative Exam ple 1 | PBT 100% (GP1000H) | shorted | NG (Five measurement results, 0.0Ω/0.0Ω/0.2Ω/0.1Ω/0.0Ω) |
| Exam ple 1 | PBT + 12% flame retardant (halogen free, phosphorus (P)-based flame retardant) | not shorted | PASS (Thirteen measurement results, Measurement 1: 6.2Ω, Measurement 2 to 12: impossible to measure (not detected) |

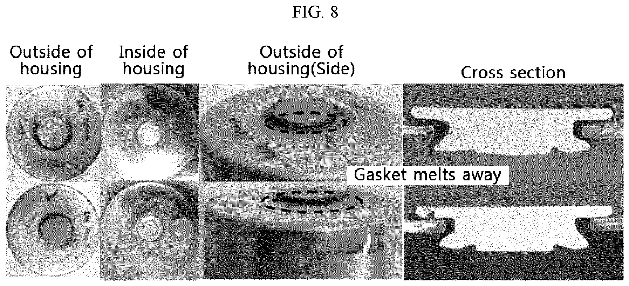

In the case of Comparative Example 1, the insulation gasket melted and a short occurred. FIG. 8 shows an image of Comparative Example 1 after the flame test.

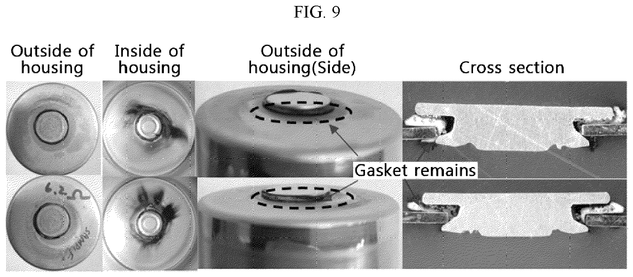

In the case of Example 1, the insulation gasket remained and a short did not occur. FIG. 9 shows an image of Example 1 after the flame test.

### [List of Reference Numerals]

1: Cylindrical secondary battery
10: Electrode assembly
C: Winding center
11: First uncoated region
12: Second uncoated region
20: Housing
30: Cap
40: Terminal
50: Insulation gasket
60: First current collector
70: Insulator
80: Second current collector
90: Sealing gasket

## Claims

1. A cylindrical secondary battery, comprising:
an electrode assembly which defines a core and an outer circumferential surface by winding a first electrode, a second electrode and a separator interposed between the first electrode and the second electrode around a winding axis, wherein the first electrode includes a first uncoated region, and the second electrode includes a second uncoated region, each uncoated region having no active material layer coating along a winding direction;
a housing accommodating the electrode assembly through an open portion at a lower end and electrically connected to the second uncoated region;
a terminal electrically connected to the first uncoated region, and exposed to outside of the housing through a closed portion of the housing opposite the open portion; and
an insulation gasket interposed between the housing and the terminal at the closed portion of the housing,
wherein the insulation gasket comprises a polymer resin and a flame retardant additive.

2. The cylindrical secondary battery according to claim 1, comprising a sealing gasket interposed between the housing and a cap at the open portion of the housing to allow the cap to seal the open portion, and
wherein the sealing gasket comprises a polymer resin and a flame retardant additive.

3. The cylindrical secondary battery according to claim 1 or 2, wherein the polymer resin comprises polyolefin, polyester, polyarylene sulfide, thermoplastic polyester elastomer (TPEE), perfluoroalkoxy resin, polyimide, or two or more of them.

4. The cylindrical secondary battery according to claim 1 or 2, wherein the polymer resin has a melting point of 250°C or higher and a heat deformation temperature of 200°C or higher.

5. The cylindrical secondary battery according to claim 1 or 2, wherein the polymer resin comprises polyethylene, polypropylene, polyisobutylene, polyethyleneterephthalate (PET), polybutylene terephthalate (PBT), poly phenylene sulfide (PPS), or two or more of them.

6. The cylindrical secondary battery according to claim 1 or 2, wherein the flame retardant additive comprises a phosphorus-based flame retardant, an inorganic flame retardant, a halogen flame retardant, or two or more of them.

7. The cylindrical secondary battery according to claim 1 or 2, wherein the flame retardant additive is a phosphorus-based flame retardant.

8. The cylindrical secondary battery according to claim 1 or 2, wherein the flame retardant additive is free of halogen.

9. The cylindrical secondary battery according to claim 1, wherein the flame retardant additive included in the insulation gasket is included in an amount of 5% to 30% based on a total weight of the insulation gasket.

10. The cylindrical secondary battery according to claim 2, wherein the flame retardant additive included in the sealing gasket is included in an amount of 5% to 30% based on a total weight of the sealing gasket.

11. A battery pack comprising the cylindrical secondary battery according to claim 1 or 2.

12. A vehicle comprising the battery pack according to claim 11.
